# EUROPEAN PATENT APPLICATION

(11) **EP 4 300 653 A1**
(43) Date of publication of application: **03.01.2024**
(21) Application number: 22874166.6
(22) Date of filing: 12.04.2022
(51) Int. Cl.: H01M 10/0569, H01M 10/0567, H01M 10/0525

(54) **ELECTROLYTE SYSTEM AND APPLICATION THEREOF**

(30) Priority: 28.09.2021 CN 202111145903
(71) Applicant: SVOLT ENERGY TECHNOLOGY CO., LTD, Changzhou, Jiangsu 213200 (CN)
(72) Inventor: ZHI, Yanhui, hangzhou, Jiangsu 213200 (CN); TIAN, Lin, hangzhou, Jiangsu 213200 (CN); YANG, Hongxin, hangzhou, Jiangsu 213200 (CN)
(74) Representative: Groth & Co. KB
(86) International application number: PCT/CN2022/086196
(87) International publication number: WO 2023/050766

(57) **Abstract**

The present disclosure provides an electrolyte system and an application thereof. The present disclosure combines a low-density electrolyte with a secondary liquid injection technique, and adds a large amount of negative electrode film-forming additives during the secondary liquid injection process, thereby improving the protection of a negative electrode interface, reducing the side reaction of carboxylate on a negative electrode surface, and improving the cyclic performance of a battery cell.

## Description

### TECHNICAL FIELD

The present disclosure relates to the technical field of lithium-ion batteries, for example, relates to an electrolyte system and an application thereof.

### BACKGROUND

With the rapid development of the electric vehicle market, the travelable range of electric vehicles continues increasing, and the energy density of single battery cells continues increasing. In order to increase the energy density of single battery cells, positive electrode materials with higher specific capacity per gram and high degree of compaction are used on one hand, and lightweight designs of the housing cover plate are used on the other hand. With the increase of energy density, the amount of liquid injection in the battery cell continues declining so as to meet the requirements of energy density, but with the decrease of liquid injection coefficient, the cyclic performance of the battery cell continues declining, therefore, it is urgent to develop a low-density electrolyte to meet the needs of the battery cell for high energy density.

The density of carboxylate is apparently lower than that of carbonate, and adding a large amount of carboxylate into the electrolyte solvent can effectively reduce the overall density of the electrolyte. However, the addition of a large amount of carboxylate would considerably affect the cyclic performance of the battery cell, especially the high-temperature cyclic performance thereof, so a large amount of negative electrode additives is needed to enhance the protection of the interface of the battery cell so as to improve the cyclic performance of the battery cell. However, the addition of a large amount of negative electrode additives causes the increase of the direct current internal resistance of the battery cell, resulting in deterioration of the power performance and low-temperature performance of the battery cell.

### SUMMARY OF THE INVENTION

The present disclosure provides an electrolyte system and an application thereof. The present disclosure combines a low-density electrolyte with a secondary liquid injection technique, and adds a large amount of negative electrode film-forming additives during the secondary liquid injection process, thereby improving the protection of a negative electrode interface, reducing the side reaction of carboxylate on a negative electrode surface, and improving the cyclic performance of a battery cell. Meanwhile, the secondary liquid injection technique ensures a low impedance of the battery cell, which in turn guarantees the power performance and low-temperature performance of the battery cell. The application of low-density electrolyte also significantly reduces the mass of the electrolyte at the same volume of electrolyte, and thus increases the energy density of the battery cell.

The present disclosure provides an electrolyte system in an embodiment, wherein, the electrolyte system comprises an electrolyte sub-system A and an electrolyte sub-system B, the electrolyte sub-system A comprises a first solvent, a lithium salt, and a first functional additive, the electrolyte sub-system B comprises a second solvent and a second functional additive, the mass proportion of carboxylate in the first solvent is greater than or equal to 40%, for example, 40%, 42%, 45%, 50%, 55%, 60%, 80%, etc., the mass proportion of carboxylate in the second solvent is greater than 50%, for example, 55%, 60%, 65%, 70%, 80%, etc., the first functional additive comprises vinylene carbonate and ethylene sulfate, the second functional additive comprises fluorobenzene and vinylene carbonate, the electrolyte sub-system A is an electrolyte used for primary liquid injection, the electrolyte sub-system B is an electrolyte used for secondary liquid injection, the volume ratio of the electrolyte used for primary liquid injection to the electrolyte used for secondary liquid injection is (8~9):1, for example, 8:1, 8.2:1, 8.5:1, 8.8:1, 9:1, etc.

The present disclosure has no specific restriction on the sequence of operations of step (1) and step (2) in the manufacturing method, for example, the step (1) may be followed by the step (2), or the step (2) may be followed by the step (1).

The electrolyte sub-system A and the electrolyte sub-system B are independently manufactured, the electrolyte system is used in a battery, and liquid is injected by the secondary liquid injection technique. Carboxylate at a percentage of more than 40% is added into the electrolyte system in the present disclosure, which greatly reduces the density of the electrolyte and reduces the mass of the electrolyte at a corresponding volume in use. The secondary liquid injection technique is adopted, wherein an appropriate amount of vinylene carbonate is added into the electrolyte sub-system A to allow it to form a stable film on the surface of the negative electrode, and by adjusting the addition amount thereof, the inorganic ingredient content in a solid electrolyte interphase (SEI) film is increased so as to ensure low impedance and good low-temperature performance of the battery cell; during the secondary liquid injection process, vinylene carbonate at a high content is added therein so as to repair the part of the SEI film that has fractured during the cycling and high-temperature storage process, thereby reducing the side reaction of a large amount of carboxylate on a negative electrode surface, and improving the high-temperature performance and cyclic performance of the battery cell.

In an embodiment, the electrolyte sub-system A is an electrolyte used for primary liquid injection.

In an embodiment, the electrolyte sub-system B is an electrolyte used for secondary liquid injection.

In an embodiment, the first solvent comprises any one of, or a combination of at least two of, vinylene carbonate, ethyl methyl carbonate, ethyl propionate and propyl propionate.

In an embodiment, the lithium salt comprises lithium hexafluorophosphate.

In an embodiment, the first functional additive comprises vinylene carbonate and ethylene sulfate.

In an embodiment, the mass concentration of lithium salt in the electrolyte sub-system A is 15-18%, for example, 15%, 15.5%, 16%, 17%, 18%, etc.

In an embodiment, the mass concentration of vinylene carbonate in the electrolyte sub-system A is 1.5-2.5%, for example, 1.5%, 1.8%, 2%, 2.2%, 2.5%, etc.

In an embodiment, the mass concentration of vinyl sulfate in the electrolyte sub-system A is 0.5-2%, for example, 0.5%, 1%, 1.2%, 1.5%, 2%, etc.

In an embodiment, the second solvent comprises any one of, or a combination of at least two of, dimethyl carbonate, ethyl acetate and methyl propionate.

In an embodiment, the second function additive comprises fluorobenzene and vinylene carbonate.

In an embodiment, the mass concentration of fluorobenzene in the electrolyte sub-system B is 3-5%, for example, 3%, 3.5%, 4%, 4.5%, 5%, etc.

In an embodiment, the mass concentration of vinylene carbonate in the electrolyte sub-system B is 5-20%, for example, 5%, 8%, 10%, 15%, 20%, etc.

The present disclosure provides a lithium-ion battery in an embodiment, the lithium-ion battery comprises the above-mentioned electrolyte system.

In an embodiment, the lithium-ion battery comprises a positive electrode.

In an embodiment, the single-plate areal density of the positive electrode is greater than 20mg/cm², for example, 22 mg/cm², 24 mg/cm², 26 mg/cm², 30 mg/cm², 35 mg/cm², etc.

In an embodiment, the compacted density of the positive electrode is greater than 2.55g/cm³, for example, 2.58 g/cm³, 2.6 g/cm³, 2.7 g/cm³, 2.75 g/cm³, 2.8 g/cm³, etc.

In an embodiment, the lithium-ion battery further comprises a diaphragm.

In an embodiment, the diaphragm is a ceramic diaphragm.

### DETAILED DESCRIPTION OF SPECIFIC EMBODIMENTS

### Embodiment 1

The present embodiment provides an electrolyte system, the electrolyte system comprises an electrolyte sub-system A and an electrolyte sub-system B, wherein the electrolyte sub-system A comprises an organic solvent, an electrolyte lithium salt, and a functional additive, wherein the organic solvent thereof comprises vinyl carbonate, methyl ethyl carbonate, ethyl propionate and propyl propionate at a mass ratio of 2:2:2:4; the electrolyte lithium salt is lithium hexafluorophosphate at a mass concentration of 18%; the functional additive thereof comprises the following ingredients by weight: vinylidene carbonate at a mass concentration of 2% and vinyl sulfate at a mass concentration of 1.5%. The electrolyte sub-system B comprises an organic solvent and a functional additive, wherein the organic solvent thereof comprises dimethyl carbonate and ethyl acetate at a mass ratio of 1:1; the functional additive thereof comprises fluorobenzene at a mass concentration of 5% serving as a wetting agent and vinylene carbonate at a mass concentration of 15% serving as a film-forming agent, and during the process of liquid injection, the volume ratio of the electrolyte sub-system A to the electrolyte sub-system B is 8.2:1.

### Embodiment 2

The present embodiment provides an electrolyte system, the electrolyte system comprises an electrolyte sub-system A and an electrolyte sub-system B, wherein the electrolyte sub-system A comprises an organic solvent, an electrolyte lithium salt, and a functional additive, wherein the organic solvent thereof comprises vinyl carbonate, methyl ethyl carbonate, ethyl propionate and propyl propionate at a mass ratio of 2:2:2:4; the electrolyte lithium salt is lithium hexafluorophosphate at a mass concentration of 16%; the functional additive thereof comprises the following ingredients by weight: vinylidene carbonate at a mass concentration of 1.5% and vinyl sulfate at a mass concentration of 1.2%. The electrolyte sub-system B comprises an organic solvent and a functional additive, wherein the organic solvent thereof comprises dimethyl carbonate and ethyl acetate at a mass ratio of 1:1; the functional additive thereof comprises fluorobenzene at a mass concentration of 4% serving as a wetting agent and vinylene carbonate at a mass concentration of 16% serving as a film-forming agent, and during the process of liquid injection, the volume ratio of the electrolyte sub-system A to the electrolyte sub-system B is 8.5:1.

### Embodiment 3

The only difference between this embodiment and Embodiment 1 lies in that, the vinylene carbonate in the electrolyte sub-system A is 1.2 parts by mass, all other conditions and parameters are identical to those of Embodiment 1.

### Embodiment 4

The only difference between this embodiment and Embodiment 1 lies in that, the vinylene carbonate in the electrolyte sub-system A is 3 parts by mass, all other conditions and parameters are identical to those of Embodiment 1.

### Embodiment 5

The only difference between this embodiment and Embodiment 1 lies in that, the vinylene carbonate in the electrolyte sub-system B is 3 parts by mass, all other conditions and parameters are identical to those of Embodiment 1.

### Embodiment 6

The only difference between this embodiment and Embodiment 1 lies in that, the vinylene carbonate in the electrolyte sub-system B is 25 parts by mass, all other conditions and parameters are identical to those of Embodiment 1.

### Comparative Example 1

The only difference between this comparative example and Embodiment 1 lies in that, only the electrolyte sub-system A is used, all other conditions and parameters are identical to those of Embodiment 1.

### Comparative Example 2

The only difference between this comparative example and Embodiment 1 lies in that, only the electrolyte sub-system B is used, all other conditions and parameters are identical to those of Embodiment 1.

### Performance Tests:

Manufacturing a battery by using the electrolyte obtained by each one of Embodiments 1-6 and Comparative examples 1-2. The battery comprises a positive electrode, a diaphragm, a negative electrode and the electrolyte for a lithium-ion battery of each of the embodiments. The positive electrode comprises a current collector and an active substance layer bonded thereon, the active substance of the active substance layer is LiFePO₄, the areal density of the positive electrode is 22mg/cm², the compacted density thereof is 2.60g/cm³, the lithium-ion battery is assembled according to the art and obtained after activation, wherein, after the primary liquid injection, the battery cell is soaked for 12h at 45°C, and after subsequently being soaked for 24h at room temperature, the battery cell is precharged. After precharging, the secondary liquid injection is carried out on the battery cell, and after the secondary liquid injection, the battery cell undergoes aging at 45°C for 24h, and after the battery cell subsequently undergoes aging at room temperature for 24h, formation and capacity grading are carried out.

The cyclic performance of the obtained lithium-ion batteries is tested, and each battery is cycled for 1000 times, and the capacity retention rate of the battery after the cycling as compared to before the cycling is calculated. The test conditions are as follows: high-temperature test: discharging at a rate of 1.0C, charging at a rate of 1.0C, the voltage range thereof is 2.5V-3.65V, the temperature thereof is 45±5°C. For the tests of direct current internal resistance at room temperature: the load is adjusted to 50% SOC, discharging at a rate of 4C for 10s, the voltage range thereof is 2.5-3.65V, the temperature thereof is 25±5°C. For the tests of low-temperature performance: the battery is fully charged at 25±5°C, the load is adjusted to 50% SOC, then the battery is discharged for 10s at a rate of 4C at -20°C, the voltage range thereof is 2.5-3.65V. The test results thereof are shown in Table 1:

**Table 1**

| | Density of Electrolyte (g/cm³) | Mass of Liquid Injection (g) | Number of Cycles | Capacity Retention Rate of High Temperature at 1C/1C | Direct Current internal resistance at room temperature (mΩ) | Direct Current internal resistance at low temperature (mΩ) |
|---|---|---|---|---|---|---|
| Embodiment 1 | 1.118 | 16.24 | 500 | 98.6% | 8.9 | 224 |
| Embodiment 2 | 1.109 | 16.11 | 500 | 98.4% | 9.1 | 216 |
| Embodiment 3 | 1.114 | 16.18 | 500 | 96.8% | 8.4 | 204 |
| Embodiment 4 | 1.120 | 16.27 | 500 | 98.8% | 9.2 | 237 |
| Embodiment 5 | 1.117 | 16.23 | 500 | 94.8% | 8.9 | 227 |
| Embodiment 6 | 1.120 | 16.27 | 500 | 99.0% | 9.2 | 240 |
| Comparative Example 1 | 1.118 | 16.27 | 500 | 89.3% | 9.5 | 238 |
| Comparative Example 2 | 1.237 | 18.00 | 500 | 99.2% | 11.7 | 350 |

It can be seen from Table 1 that, by using the electrolyte systems according to Embodiments 1-6 and the liquid injection methods thereof, the high-temperature cyclic performance of the battery cell can be guaranteed while the amount of liquid injection of the electrolyte is effectively reduced.

It can be seen from comparison between Embodiment 1 and Embodiments 3 and 4 that, the content of vinylidene carbonate in the electrolyte sub-system A can affect the performance of the manufactured electrolyte. If the concentration of vinylidene carbonate in the electrolyte sub-system A is controlled within 1.5-2.5%, the performance of the manufactured electrolyte is better. If the concentration of vinylidene carbonate in the electrolyte sub-system A is too high, the initial direct current internal resistance of the battery cell is relatively high, which would cause deterioration of the low-temperature performance and power performance of the battery cell. If the concentration of vinylidene carbonate in the electrolyte sub-system A is too low, the film-forming effect is poor in the process of precharging the battery cell, which would adversely affect the cyclic performance of the battery cell.

It can be seen from comparison between Embodiment 1 and Embodiments 5 and 6 that, the content of vinylidene carbonate in the electrolyte sub-system B can affect the performance of the manufactured electrolyte. If the concentration of vinylidene carbonate in the electrolyte sub-system B is controlled within 5-20%, the performance of the manufactured electrolyte is better. If the concentration of vinylidene carbonate in the electrolyte sub-system B is too high, the cost of the electrolyte would be significantly increased without significantly improving the performance of the battery cell. If the concentration of vinyl carbonate in the electrolyte sub-system B is too low, there would be not enough film-forming additive to repair the fractured parts of SEI film during the cycling process of electrolyte, which would cause deterioration of the high-temperature cyclic performance of the battery cell.

It can be seen from comparison between Embodiment 1 and Comparative examples 1 and 2 that, the present disclosure combines a low-density electrolyte with a secondary liquid injection technique, and adds a large amount of negative electrode film-forming additives during the secondary liquid injection process, thereby improving the protection of a negative electrode interface, reducing the side reaction of carboxylate on a negative electrode surface, and improving the cyclic performance of the battery cell. Meanwhile, the secondary liquid injection technique ensures a low impedance of the battery cell, which in turn guarantees the power performance and low-temperature performance of the battery cell. The application of low-density electrolyte also significantly reduces the mass of the electrolyte at the same volume of electrolyte, and thus increases the energy density of the battery cell.

## Claims

1. An electrolyte system, **characterized in that**, the electrolyte system comprises an electrolyte sub-system A and an electrolyte sub-system B, the electrolyte sub-system A comprises a first solvent, a lithium salt, and a first functional additive, the electrolyte sub-system B comprises a second solvent and a second functional additive, the mass proportion of carboxylate in the first solvent is greater than or equal to 40%, the mass proportion of carboxylate in the second solvent is greater than 50%, the first functional additive comprises vinylene carbonate and ethylene sulfate, the second functional additive comprises fluorobenzene and vinylene carbonate, the electrolyte sub-system A is an electrolyte used for primary liquid injection, the electrolyte sub-system B is an electrolyte used for secondary liquid injection, the volume ratio of the electrolyte used for primary liquid injection to the electrolyte used for secondary liquid injection is (8~9):1.

2. The electrolyte according to claim 1, **characterized in that**, the first solvent comprises any one of, or a combination of at least two of, vinylene carbonate, ethyl methyl carbonate, ethyl propionate and propyl propionate.

3. The electrolyte according to claim 1 or 2, **characterized in that**, the lithium salt comprises lithium hexafluorophosphate.

4. The electrolyte according to any one of claims 1-3, **characterized in that**, the first functional additive comprises vinylene carbonate and ethylene sulfate.

5. The electrolyte according to any one of claims 1-4, **characterized in that**, the mass concentration of the lithium salt in the electrolyte sub-system A is 15-18%.

6. The electrolyte according to any one of claims 1-5, **characterized in that**, the mass concentration of vinylene carbonate in the electrolyte sub-system A is 1.5-2.5%.

7. The electrolyte according to any one of claims 1-6, **characterized in that**, the mass concentration of ethylene sulfate in the electrolyte sub-system A is 0.5-2%.

8. The electrolyte according to any one of claims 1-7, **characterized in that**, the second solvent comprises any one of, or a combination of at least two of, dimethyl carbonate, ethyl acetate and methyl propionate.

9. The electrolyte according to any one of claims 1-8, **characterized in that**, the second function additive comprises fluorobenzene and vinylene carbonate.

10. The electrolyte according to any one of claims 1-9, **characterized in that**, the mass concentration of fluorobenzene in the electrolyte system B is 3-5%.

11. The electrolyte according to any one of claims 1-10, **characterized in that**, the mass concentration of vinylene carbonate in the electrolyte system B is 5-20%.

12. A lithium-ion battery, **characterized in that**, the lithium-ion battery adopts an electrolyte system according to any one of claims 1-11.

13. The lithium-ion battery according to claim 12, **characterized in that**, the lithium-ion battery comprises a positive electrode, the single-plate areal density of the positive electrode is greater than 20mg/cm², the compacted density of the positive electrode is greater than 2.55g/cm³.

14. The lithium-ion battery according to claim 12 or 13, **characterized in that**, the lithium-ion battery further comprises a diaphragm which is a ceramic diaphragm.
